**Europäisches Patentamt**

**European Patent Office**

**Office européen des brevets**

(19)

(11) Veröffentlichungsnummer: **0 017 665**
**A1**

# EUROPÄISCHE PATENTANMELDUNG

(12)

(21) Anmeldenummer: **79104966.1**

(22) Anmeldetag: **06.12.79**

(51) Int. Cl.³: **C 04 B 33/30, F 26 B 21/00**

(30) Priorität: **09.04.79 DE 2914243**

(43) Veröffentlichungstag der Anmeldung: **29.10.80**
**Patentblatt 80/22**

(84) Benannte Vertragsstaaten: **AT BE CH FR GB IT NL**

(71) Anmelder: **KELLER OFENBAU GmbH,**
**Carl-Keller-Strasse 2-10, D-4530 Ibbenbüren 2 (DE)**

(72) Erfinder: **Bücker, Franz, Adlersteige 20,**
**D-4530 Ibbenbüren 2 (DE)**

(54) **Anlage zum rhythmischen Trocknen von keramischen Formlingen.**

(57) Bei einer Anlage zum rhythmischen Trocknen von keramischen Formlingen ist ein Lüfterwagen (9, 10, 11) in Gängen (6, 7, 8) eines Trocknungsraumes (1, 1a) neben Trocknungsgutreihen (3) verfahrbar angeordnet. Umwälzventilatoren (15, 16), die stationär oberhalb der Gänge (6, 7, 8) angeordnet sind, führen dem Trochnungsgut (2) die Trocknungsluft zu, wobei sich im Trocknungsraum (1, 1a) oberhalb der Trocknungsgutreihen (3) eine Luftführungsdecke (24, 25) befindet.

Der in den Gängen (6, 7, 8) hin und her verfahrbare Lüfterwagen (9, 10, 11) besteht aus kastenförmigen Seitenwänden (17, 18, 19) und Stirnwänden (17a, 18a, 19a), wobei die Seitenwände und die Stirnwände entsprechend der Höhe der Tocknungsgutreihen (3) ausgebildet sind.

Die Seitenwände (17, 18, 19) besitzen Luftaustrittsöffnungen, die die Seitenwände in vertikaler Richtung durchbrechen und von veränderbar angeordneten Luftleitblechen begrenzt sind.

Die Seitenwände (17, 18, 19) bestehen jeweils aus einer Anzahl Paneel-Elementen, die zwecks Veränderung der Luftaustrittsöffnungen auswechselbar sind.

EP 0 017 665 A1

ACTORUM AG

- 1 -

KELLER OFENBAU GMBH

Carl-Keller-Straße 2-10

4530 Ibbenbüren 2

Anlage zum rhythmischen Trocknen von keramischen Formlingen
_____

Die Erfingung betrifft eine Anlage zum rhythmischen Trocknen von keramischen Formlingen, mit den im Oberbegriff des Patentanspruchs 1 beschriebenen Merkmalen.

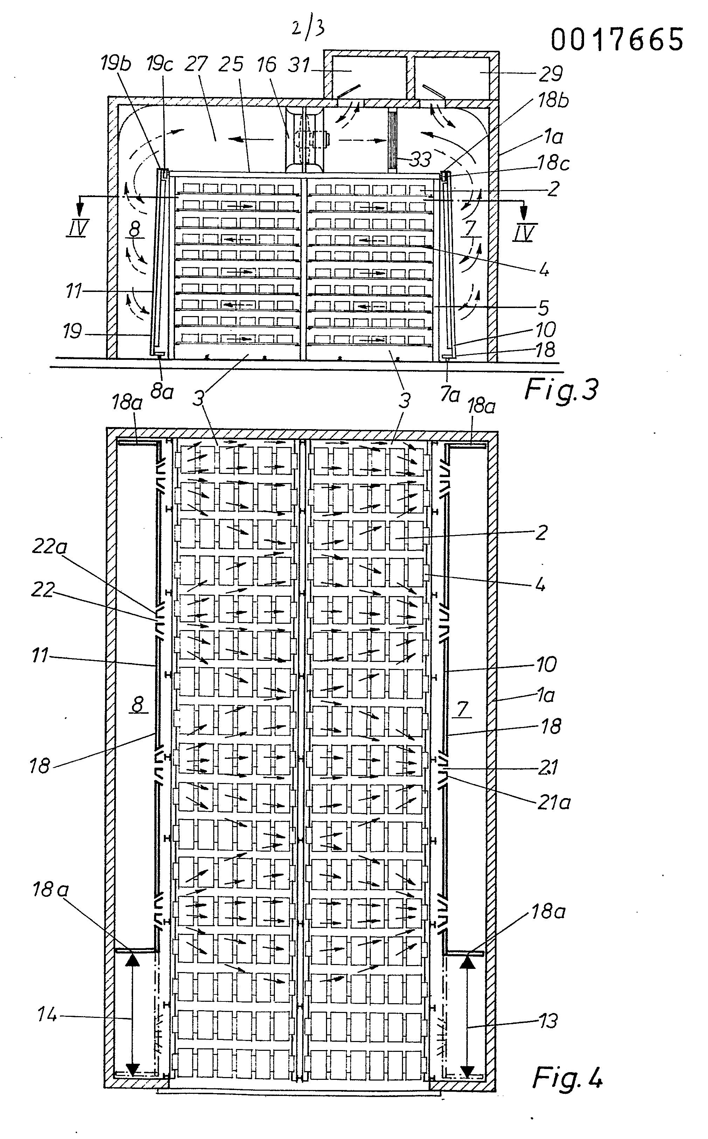

Die DE-GM 72 04 275, insbesondere Fig. 3, offenbart eine derartige Anlage, bei der in den vom zu trocknenden Gut begrenzten Gängen Lüfterwagen angeordnet sind, die entlang der Trocknungsgutreihen hin und her verfahren werden. Je nach Größe der Anlage sind ein oder mehrere hintereinander gekoppelte Lüfterwagen pro Gang unterbebracht. Die Lüfterwagen sind mit einem großen oder mehreren kleinen Umwälzventilatoren bestückt. Diese Umwälzventilatoren sind entweder starr oder um eine vertikale Achse drehbar im Rahmen der Lüfterwagen angeordnet und blasen die Trocknungsluft in das zu trocknende Gut.

Nachteilig hierbei ist, daß zeitweilig das Trocknungsgut nur einer Trocknungsgutreihe angeblasen wird, während die andere Trocknungsgutreihe im Luftschatten der Umwälzventilatoren liegt und erst nach Reversierung oder Drehung der Umwälzventilatoren mit Trocknungsluft beaufschlagt wird.

Hinzu kommt noch, daß bei drehbaren Umwälzventilatoren ein Großteil der Trocknungsluft in den Gängen beblasen wird und somit ohne Nutzeffekt ist.

Non Nachteil ist ferner, daß die Motoren der Umwälzventilatoren und des Verfahrantriebes durch Schleppkabel oder ähnliche flexible Kabel mit der Stromquelle verbunden sind. Durch die oftmalige Hin- und Herbewegung der Lüfterwagen treten an den Kabeln oft Kabelbrüche oder andere Störungen an der Stromzufuhr auf.

Ferner tritt bei der bekannten Anlage der Nachteil auf, daß keine Zwangsführung der Trocknungsluft innerhalb des Trocknungsgutes möglich ist. Ein Teil der umgewälzten Trocknungsluft wird nicht optimal durch das Trocknungsgut geblasen, sondern gelangt auf dem kürzesten Weg wieder zur Saugseite der Umwälzventilatoren zurück.

Die Verfahrwege der Lüfterwagen sind relativ lang, was einen schnelleren Verschleiß der Lauf- und Tragrollen zur Folge hat.

Die Aufgabe der Erfingung besteht nun darin, eine Anlage zum rhythmischen Trocknen von kreamischen Formlingen zu schaffen, welche die Trocknungsluft optimal ausnutzt, eine gezielte, zwangsweise und gleichzeitige Anblasung aller Trocknungsgutreihen ermöglicht und dadurch die Trocknungszeiten verkürzt und Energie einspart und ohne Schleppkabel auskommt.

Diese Aufgabe wird erfindungsgemäß durch die im kennzeichnenden Teil des Anspruches 1 beschriebenen Merkmale gelöst.

Weitere Merkmale der Erfindung sind Gegenstand der Ansprüche 2 und 3.

Dies bewirkt, daß der von den Umwälzventilatoren erzeugte Luftstrom in den Lüfterwagen geführt wird und dort einen Überdruck erzeugt. Die Trocknungsluft kann somit durch die vertikalen Luftaustrittsöffnungen in das Trocknungsgut einströmen. Die oberhalb des Trocknungsgutes angeordnete Luftführungsdecke verhindert den Luftkurzschluß. Die Trocknungsluft muß zwangsläufig das Trocknungsgut durchströmen, so daß sie optimal ausgenutzt wird. Die Anzahl und Leistung der eingesetzten Umwälzventilatoren richtet sich nach der pro Zeiteinheit zu verdunstenden Wassermenge in dem Trocknungsraum.

Der Lüfterwagen ist an den Stirnflächen und zum Boden hin abgedichtet. Die Seitenwände bestehen aus einzelnen Paneel-Elementen, die leicht auswechselbar sind, so daß an allen gewünschten oder erforderlichen Stellen Luftaustrittsöffnungen geschaffen werden können.

An den Luftaustrittsöffnungen werden verstellbare und leicht zu montierende Luftleitbleche eingesetzt, die die Richtung und Geschwindigkeit der auszutretenden Trocknungsluft bestimmen. Durch das kontinuierliche Verfahren des Lüfterwagens strömt die Trocknungsluft gleichmäßig an allen Formlingen des Trocknungsgutes vorbei, und zwar in verschiedenen, bestimmbaren Richtungen. Dadurch ist eine gleichmäßige Trocknung gewährleistet.

Die aus dem Trocknungsgut austretende Luft wird oberhalb des Trocknungsgutes und der Luftführungsdecke von den Umwälzventilatoren wieder angesaugt, nachdem sie durch Wärmeerzeuger oder durch Luftaustausch zwischen mit Feuchtigkeit angereicherter Luft und trockener Heißluft wieder aufgeheizt wird.

Durch die variable Anordnung der Luftaustrittsöffnungen können die Intervalle der Trocknungsgutanblasung genau den Erfordernissen des Trocknungsprogramms angepaßt werden. Für kurze Intervalle sind die Luftaustrittsöffnungen mit geringem Abstand und für längere Intervalle mit weiterem Abstand angeordnet.

Die Verfahrwege des Lüfterwagens im Trocknungsraum können relativ kurzgehalten werden. Die beanspruchung der Lauf- und Tragrollen auf Verschleiß ist geringer.

Eine andere Ausführungsform der erfindungsgemäßen Anlage besteht darin, daß der Lüfterwagen aufgeteilt wird und in links und rechts sich vom Trocknungsgut befindlichen Gängen angeordnet wird. Die Umwälzventilatoren sind dabei oberhalb der Luftführungsdecke über dem Trocknungsgut angeordnet. Durch Umschaltung der Ventilatorendrehrichtung kann die Trocknungsluft entweder zur linken oder zur rechten Seite zum Lüfterwagen geführt werden. Damit ist ebenfalls ein reversiebles und rhythmisches Anblasen des Trocknungsgutes möglich, so daß kürzere Trockenzeiten erreicht werden.

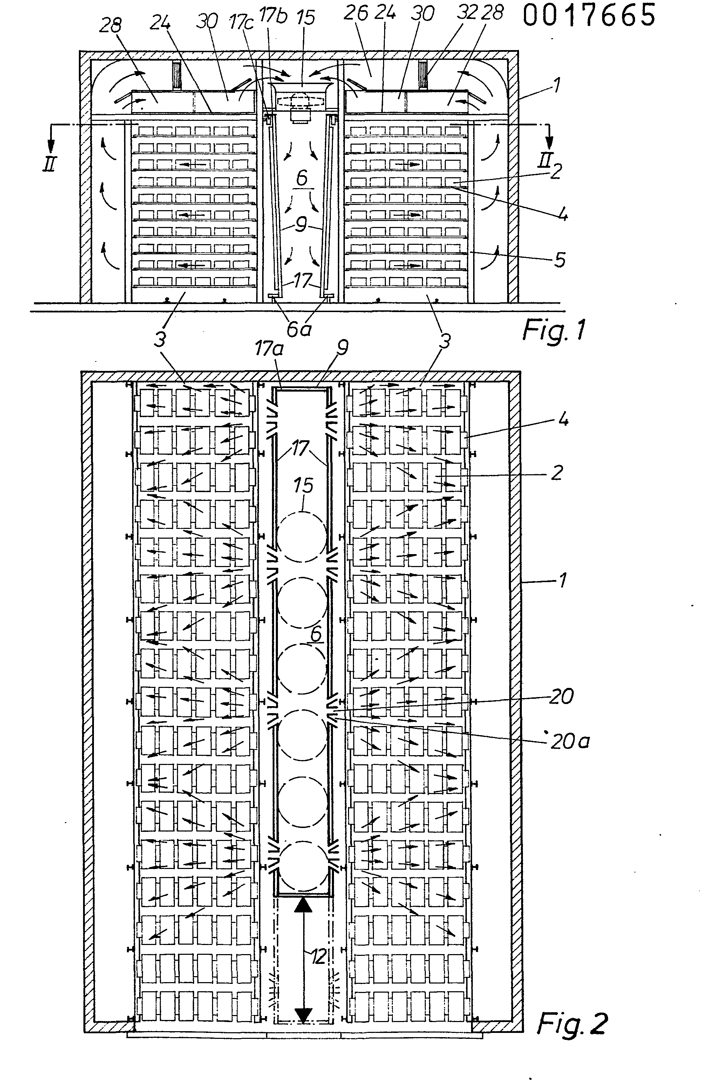

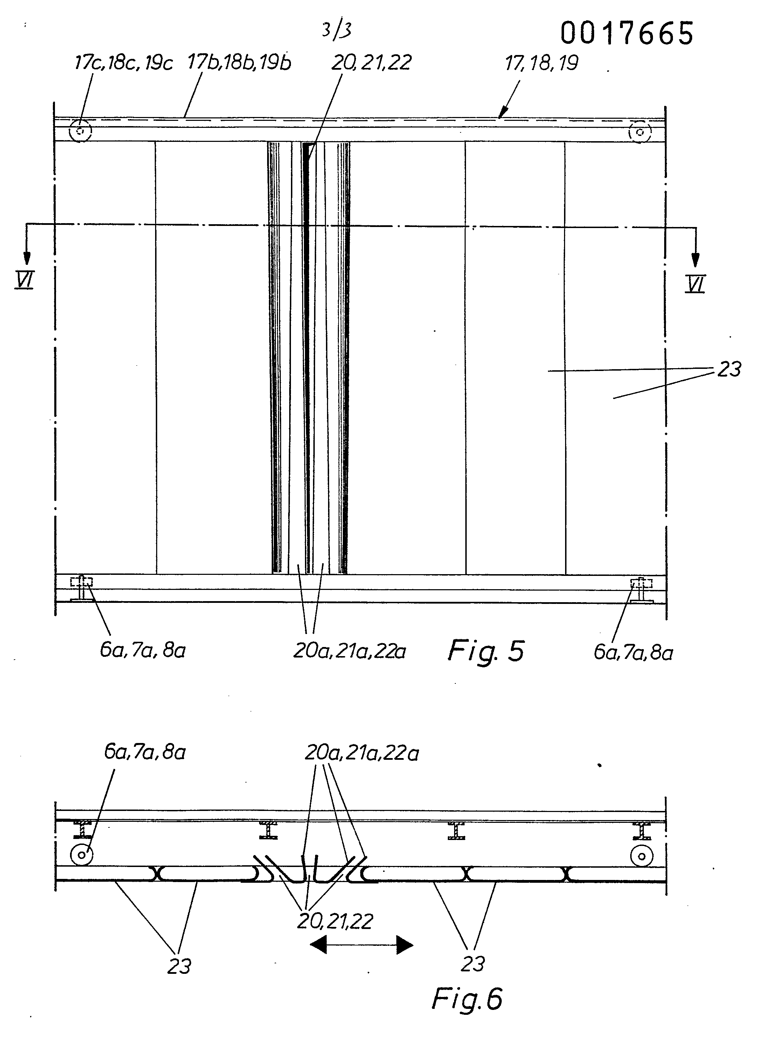

Anhand der Zeichnung werden 2 Ausführungsbeispiele der Erfindung näher erläutert. Es zeigt Fig. 1 einen Querschnitt durch die Anlage gemäß der 1. Ausführungsform, Fig. 2 eine Draufsicht nach einem Schnitt längs der Linie II-II in Figur 1, Fig. 3 einen Querschnitt durch die Anlage gemäß der 2. Ausführungsform, Fig. 4 eine Draufsicht nach einem Schnitt längs der Linie IV-IV in Fig. 3, Fig. 5 eine Teilansicht des Lüfterwagens, Fig. 6 eine Teildraufsicht des Lüfterwagens nach einem Schnitt längs der Linie VI-VI in Fig. 5.

Mit 1,1a ist der Trocknungsraum bezeichnet, in welchem das Trocknungsgut 2, und zwar keramische Formlinge, in Trocknungsgutreihen 3 liegend eingefahren wird. Das Trocknungsgut 2 liegt auf Formlingsträgern 4, die wiederum auf einem Trocknungsgestell 5 abgelegt sind. Das Trocknungsgestell 5 kann ortsfest oder auch beweglich in einzelne Trocknungswagen ausgebildet sein.

Neben den Trocknungsgutreihen 3 sind Gänge 6, 7, 8 vorhanden, in denen jeweils ein Lüfterwagen 9, 10, 11 entsprechend der Doppelpfeile 12, 13, 14 hin und her verfahrbar angeordnet ist.

Oberhalb des Trocknungsgutes 2 sind Umwälzventilatoren 15, 16 stationär angeordnet, die die Trocknungsluft zu dem Lüfterwagen 9 doer je nach Blasrichtung der Umwälzventilatoren 16 entweder in den Lüfterwagen 10 oder in den Lüfterwagen 11 blasen.

Die Lüfterwagen 9, 10, 11 sind entsprechend der Doppelpfeile 12, 13, 14 verfahrbar angeordnet und werden mit einem stationären, nicht dargestellten Antrieb hin- und herbewegt. Die Lüfterwagen 9, 10, 11 bestehen aus Seitenwänden 17, 18, 19 und Stirnwänden 17a, 18a, 19a und sind am Boden gegenüber dem Trocknungsraum 1,1a dicht abgeschlossen. An den Seitenwänden 17, 18, 19 sind Laufschienen 17b, 18b, 19b befestigt, die auf Transportrollen 17c, 18c, 19c lagern. Auf dem Boden der Gänge 6, 7, 8 sind Stützrollen 6a, 7a, 8a angebracht, an die sich die Seitenwände 17, 18, 19 anlehnen und darauf abrollen.

In den Seitenwänden 17, 18, 19 sind vertikal verlaufende und der Höhe der Seitenwände entsprechende Luftaustrittsöffnungen 20, 21, 22 angeordnet, die aus Luftleitblechen 20a, 21a, 22a bestehen. Die Luftleitbleche 20a, 21a, 22a bestehen. Die Luftleitbleche 20a, 21a, 22a sind derart verstellbar ausgebildet, daß die Luftaustrittsöffnungen 20, 21, 22 verkleinert bzw. vergrößert werden können, wodurch die Strömungsrichtung und die Durchflußmenge und Geschwindigkeit der Trocknungsluft bestimmbar sind.

Die Seitenwände 17, 18, 19 bestehen zwischen den Luftaustrittsöffnungen 20, 21, 22 aus auswechselbaren Paneel-Elementen 23, die beliebig in den Seitenwänden 17, 18, 19 angeordnet und ausgewechselt werden können, so daß die Luftaustrittsöffnungen 20, 21, 22 mit den Luftleitblechen 20a, 21a, 22a an beliebigen Stellen der Seitenwände 17, 18, 19 angeordnet werden können.

Zur Verhinderung eines Luftkurzschlusses ist oberhalb des Trocknungsgutes 2 eine Luftführungsdecke 24, 25 angebracht. Dadurch wird die Trocknungsluft zwangsweise durch das Trocknungsgut 2 geführt, bevor sie durch den Rückführungskanal 26, 27 wieder zu den Umwälzventilatoren 15, 16 gelangt.

Innerhalb oder außerhalb des Rückführungskanals 26, 27 können zu Luftkanäle 28, 29 und Abluftkanäle 30, 31, die eine Konditionierung der Trocknungsluft bewirken, angeordnet werden. Durch die Zwangsführung der umgewälzten Trocknungsluft besteht die Möglichkeit, in dem Rückführungskanal 26, 27 Wärmeerzeuger 32, 33, für die Aufheizung der Trocknungsluft einzusetzen, so daß auch eine Luftaufheizung ohne Zuführung von heißer Luft und Abführung einer entsprechenden Luftmenge eine wirtschaftliche Trocknung möglich ist.

Patentansprüche

1. Anlage zum rühythmischen Trocknen von keramischen Formlingen, in welcher ein Lüfterwagen in Gängen eines Trocknungsraumes neben Trocknungsgutreihen verfahrbar angeordnet ist, mit Umwälzventilatoren, die die Trocknungsluft dem Trocknungsgut zuführen, dadurch gekennzeichnet, daß im Trocknungsraum (1,1a) oberhalb der Trocknungsgutreihen (3) eine Luftführungsdecke (24, 25) angeordnet ist, daß die Umwälzventilatoren (15, 16) stationär angeordnet sind, daß der Lüfterwagen (9, 10, 11) aus in Kastenform angeordneten Seitenwänden (17, 18, 19) und Stirnwänden (17a, 18a, 19a) besteht, daß die Seitenwände (17, 18, 19) und Stirnwände (17a, 18a, 19a) entsprechend der Höhe der Trocknungsgutreihen (3) ausgebildet sind, daß die Seitenwände (17, 18, 19) Luftaustrittsöffnungen (20, 21, 22) besitzen.

2. Anlage nach Anspruch 1, dadurch gekennzeichnet, daß die Luftaustrittsöffnungen (20, 21, 22) die Seitenwände (17, 18, 19) in vertikaler Richtung durchbrechen und von veränderbar angeordneten Luftleitblechen (20a, 21a, 22a) begrenzt sind.

3. Anlage nach Anspruch 1 oder 2, dadurch gekennzeichnet, daß die Seitenwände (17, 18, 19) jeweils aus einer Anzahl Paneel-Elementen (23) besteht, die zwecks Veränderung der Luftaustrittsöffnungen (20, 21, 22) auswechselbar sind.

1/3    0017665

Fig.1

Fig.2

Fig. 3

Fig. 4

2/3

0017665

0017665

17c,18c,19c    17b,18b,19b    20,21,22    17,18,19

VI

23

6a,7a,8a    20a,21a,22a    *Fig. 5*    6a,7a,8a

6a,7a,8a    20a,21a,22a

20,21,22

23    23

*Fig.6*

## Europäisches Patentamt

# EUROPÄISCHER RECHERCHENBERICHT

Nummer der Anmeldung 0017665

EP 79 10 4966.1

| Kategorie | EINSCHLÄGIGE DOKUMENTE — Kennzeichnung des Dokuments mit Angabe, soweit erforderlich, der maßgeblichen Teile | betrifft Anspruch |
|---|---|---|
| D,A | DE – U – 7 204 275 (F. SCHÄFER GMBH) <br> * Ansprüche * <br> –– | 1 |
| A | FR – A – 1 267 106 (A. PEREGO) <br> –– | |
| A | DE – U – 1 636 143 (MASCHINENFABRIK <br> G. KIEFER) <br> –– | |
| A | DE – U – 6 605 218 (KELLER SPEZIAL- <br> TECHNIK) <br> –– | |
| A | GB – A – 887 771 (FAN SYSTEMS LTD.) <br> –– | |
| A | DE – U – 6 936 575 (A. HÄSSLER) <br> –––– | |

**KLASSIFIKATION DER ANMELDUNG (Int.Cl.3)**

C 04 B 33/30
F 26 B 21/00

**RECHERCHIERTE SACHGEBIETE (Int. Cl.3)**

C 04 B 33/00
F 26 B 15/00
F 26 B 21/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 18-06-1980 | HÖRNER |

EPA form 1503.1  06.78